# DEMANDE DE BREVET EUROPEEN

(11) **EP 4 573 964 A1**
(43) Date de publication de la demande: **25.06.2025**
(21) Numéro de dépôt: 23217717.0
(22) Date de dépôt: 18.12.2023
(51) Int. Cl.: A44C 17/02, G04B 45/00, G04B 19/10, G04B 19/32

(54) **PROCÉDÉ DE FABRICATION D'UNE PIÈCE D'HABILLAGE**

(71) Demandeur: The Swatch Group Research and Development Ltd, 2074 Marin (CH)
(72) Inventeur: DOVCIK, Marek, 06250 Mougins (FR); FRANÇOIS, Nicolas, 2000 Neuchâtel (CH); NAPOLI, Sophie, 2000 Neuchâtel (CH)
(74) Mandataire: ICB SA

(57) **Abrégé**

L'invention concerne un procédé de fabrication d'une pièce d'habillage (10) comportant des étapes de :
- réalisation d'un substrat (11) comportant une cavité (110),
- réalisation, par moulage, d'un élément décoratif (12) dans un matériau polymère transparent présentant une charge de particules réflectives, dans laquelle l'élément décoratif (12) est formé de sorte à présenter au moins une tête décorative (120) reliée à un pied d'ancrage (121),
- fixation de l'élément décoratif (12) dans la cavité (110), de sorte que le pied d'ancrage (121) coopère par complémentarité de forme avec cette dernière.

## Description

### Domaine technique de l'invention

L'invention relève du domaine de la décoration de pièces d'horlogerie, de bijouterie ou d'articles de mode, et notamment de la fabrication d'une pièce d'habillage comprenant un ou plusieurs éléments décoratifs ressemblant à une pierre précieuse.

Dans le présent texte, les termes « pierre précieuse » désignent sans distinction les pierres précieuses et semi-précieuses.

Ce procédé peut s'appliquer avantageusement à toute pièce d'habillage dans le domaine de l'horlogerie, de la bijouterie, des articles de mode tels que les articles de maroquinerie, de lunetterie, d'instruments d'écriture ou les appareils portables électroniques.

### Arrière-plan technologique

Afin de fournir à un objet une haute valeur ajoutée, il est courant de le décorer avec une ou des pierres précieuses chassées dans un chaton. Cela permet d'augmenter significativement la valeur perçue de l'objet.

Pour des raisons tant économiques qu'écologiques, les pierres précieuses peuvent être réalisées de manière synthétique, en laboratoire. Notamment, la réalisation de pierres précieuses en laboratoire est considérablement moins coûteuse en énergie que l'extraction de pierres précieuses naturelles par exploitation minière et le prix d'une pierre synthétique est entre 30 et 40% moins élevé que celui d'une pierre naturelle équivalente.

Un avantage des pierres réalisées de façon synthétique réside en outre dans le fait qu'elles présentent une structure atomique identique à celle des pierres naturelles issues de l'exploitation minière, et par conséquent elles présentent un aspect visuel identique à ces dernières.

Afin de réduire encore le coût de production de ce type de décor, des éléments décoratifs dont l'aspect imite celui des pierres précieuses ont été développés en matériau polymère. Cependant, bien que la fabrication de ces éléments décoratifs ne nécessite qu'une fraction de l'énergie nécessaire à la production de pierres réalisées de façon synthétique, leur aspect visuel n'est pas convenable pour remplacer ces pierres.

Il existe donc un besoin de disposer d'un élément décoratif dont la production présente un faible coût financier et énergétique, tout en conservant les éléments décoratifs appréciés des pierres précieuses, comme la brillance ou le scintillement, conférant ainsi à l'objet décoré un aspect recherché similaire à celui décrit plus haut.

### Résumé de l'invention

À cet effet, la présente invention concerne un procédé de fabrication d'une pièce d'habillage comportant des étapes de :
- réalisation d'un substrat comportant une cavité,
- réalisation, par moulage, d'un élément décoratif dans un matériau polymère transparent présentant une charge de particules réflectives, dans laquelle l'élément décoratif est formé de sorte à présenter au moins une tête décorative reliée à un pied d'ancrage,
- fixation de l'élément décoratif dans la cavité, de sorte que le pied d'ancrage coopère par complémentarité de forme avec cette dernière.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, l'étape de réalisation de l'élément décoratif est mise en oeuvre par injection, le pied d'ancrage étant formée par une carotte d'injection.

Dans des modes particuliers de mise en oeuvre, lors de l'étape de réalisation de l'élément décoratif, ce dernier est réalisé de sorte que le pied d'ancrage constitue une structure support reliant plusieurs têtes décoratives entre elles.

Dans des modes particuliers de mise en oeuvre, une couche opaque est déposée sur le pied d'ancrage par une méthode de dépôt de couche mince sous vide, par pulvérisation ou trempage sélectif, ou par injection lors de la mise en oeuvre de l'étape de réalisation de l'élément décoratif.

Dans des modes particuliers de mise en oeuvre, lors de l'étape de réalisation de l'élément décoratif, ce dernier est réalisé de sorte que l'élément décoratif comporte une tête décorative reliée à un pied d'ancrage qui lui est propre.

Dans des modes particuliers de mise en oeuvre, lors de l'étape de fixation de l'élément décoratif, le pied d'ancrage est collé dans la portion de la cavité de forme complémentaire.

Dans des modes particuliers de mise en oeuvre, lors de l'étape de fixation de l'élément décoratif, le pied d'ancrage s'étend au-delà du substrat par une portion terminale, ladite portion terminale étant déformée à chaud, c'est-à-dire à la suite de son chauffage jusqu'à la ramollir suffisamment pour la déformer, afin de générer une liaison permanente entre l'élément décoratif et le substrat.

Dans des modes particuliers de mise en oeuvre, lors de l'étape de réalisation de l'élément décoratif, le matériau polymère est un thermoplastique choisi parmi un polycarbonate, un polyamide ou un poly(méthacrylate de méthyle).

Dans des modes particuliers de mise en oeuvre, lors de l'étape de réalisation de l'élément décoratif, le matériau polymère est choisi de sorte à présenter un coefficient de transmission optique supérieur à 80%, voire 90%, voire 95%.

Dans des modes particuliers de mise en oeuvre, lors de l'étape de réalisation de l'élément décoratif, les particules réflectives sont constituées par des paillettes de matériau métallique et/ou de nacre, ou des particules de verre présentant un revêtement réflectif.

Dans des modes particuliers de mise en oeuvre, lors de l'étape de réalisation de l'élément décoratif, la proportion en masse de la charge de particules réflectives est inférieure à 1%.

Dans des modes particuliers de mise en oeuvre, lors de l'étape de réalisation de l'élément décoratif, une couche mince réflective est déposée sur au moins une face de l'élément décoratif destinée à reposer en regard de la cavité du substrat.

Dans des modes particuliers de mise en oeuvre, lors de l'étape de réalisation du substrat, une couche réflective est déposée dans la cavité.

Dans des modes particuliers de mise en oeuvre, la couche mince réflective est déposée par un procédé de dépôt sous vide et est réalisée en SiO2 ou en TiO2.

Dans des modes particuliers de mise en oeuvre, lors du moulage de l'élément décoratif, les parois du moule destinées à former la tête décorative présentent un état de surface poli miroir.

Dans des modes particuliers de mise en oeuvre, le procédé comprend une étape de polissage de la tête décorative de sorte que ses faces présentent un état de surface poli miroir.

Dans des modes particuliers de mise en oeuvre, lors de l'étape de réalisation de l'élément décoratif, une charge de particules photoluminescentes est intégrée au matériau polymère dans des proportions en masse inférieure à 1%.

Dans des modes particuliers de mise en oeuvre, lors de l'étape de réalisation de l'élément décoratif, une fois l'élément décoratif obtenu par moulage, une couche mince de matériau photoluminescent est déposée sur les faces de la tête destinées à reposer en vis-à-vis de la cavité du substrat.

La présente invention concerne, selon un autre objet, une pièce d'habillage réalisée par un procédé tel que décrit précédemment.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une étape de réalisation d'un élément décoratif du procédé selon un premier exemple de réalisation de la présente invention ;
- la figure 2 représente l'élément décoratif obtenu à la suite de la mise en oeuvre de l'étape de la figure 1 ;
- la figure 3 représente une étape de fixation de l'élément décoratif sur un substrat ;
- la figure 4 représente une étape de réalisation d'un élément décoratif du procédé selon une variante du premier exemple de réalisation de la présente invention ;
- la figure 5 représente une étape de réalisation d'un élément décoratif du procédé selon un second exemple de réalisation de la présente invention ;
- les figures 6 et 7 représentent une étape de fixation de l'élément décoratif sur un substrat dans une forme particulière du second exemple de réalisation de la présente invention ;
- les figures 8 à 10 représentent une étape de fixation de l'élément décoratif sur un substrat dans une autre forme particulière du second exemple de réalisation de la présente invention.

On note que les figures ne sont pas nécessairement dessinées à l'échelle pour des raisons de clarté.

### Description détaillée de l'invention

L'invention concerne un procédé de fabrication d'une pièce d'habillage 10, telle qu'un cadran, un réhaut, une couronne ou une lunette d'une montre, comprenant des étapes de réalisation d'un substrat 11 et d'un élément décoratif 12, suivies d'une étape de fixation de l'élément décoratif 12 sur le substrat 11 afin de former la pièce d'habillage 10. Ces étapes sont respectivement décrites en détail ci-après.

Le substrat 11 est réalisé, lors de la mise en oeuvre du procédé selon l'invention, de sorte à comporter une cavité 110 destinée à recevoir un élément décoratif 12. Le substrat 11 peut être réalisé en tout matériau approprié, tel qu'en matériau métallique, céramique ou polymère. Il y a lieu de noter que, bien que le substrat 11 puisse comporter une pluralité de cavités 110, pour des raisons de clarté, il est décrit avec une seule cavité 110 dans le présent texte et sur les figures.

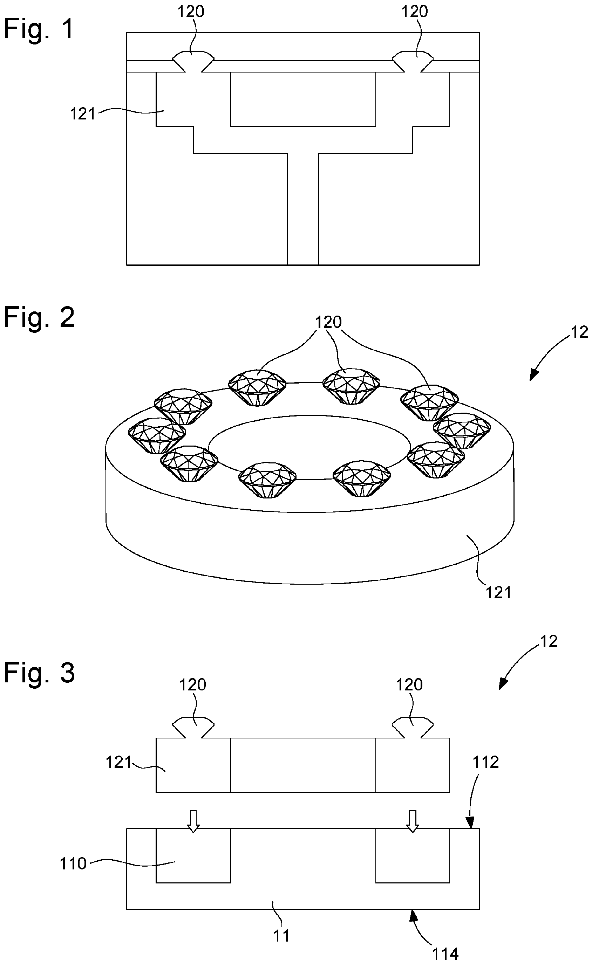

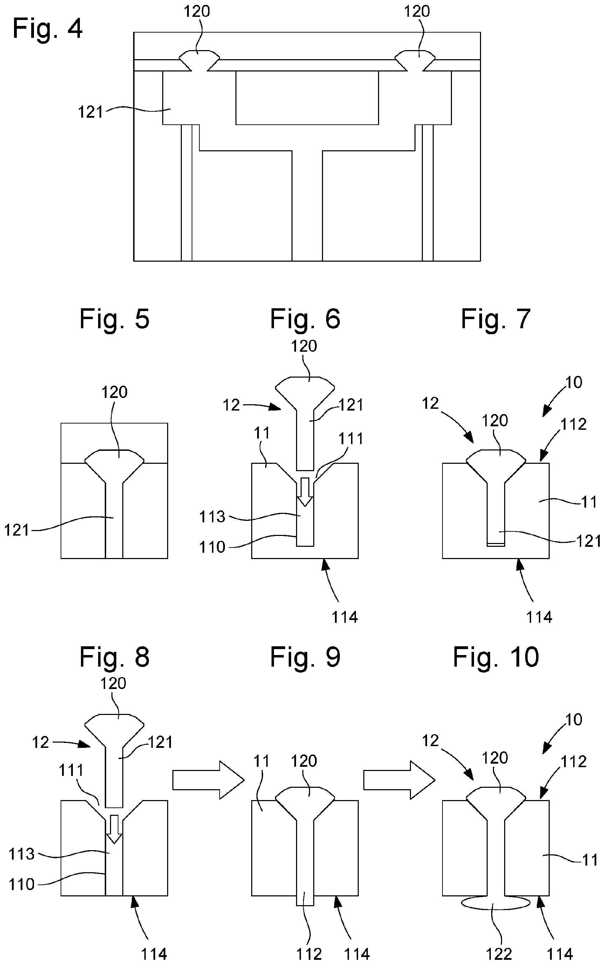

En particulier, la cavité 110 peut comporter une section droite constante, tel que visible sur la figure 3, ou peut comporter une portion proximale 111 débouchant sur une face d'habillage 112 du substrat 11 destinée à être visible pour un utilisateur, prolongée par une portion distale 113 de section droite réduite, comme le montrent les figures 6 à 10.

La cavité 110 peut être borgne ou débouchante. Notamment, sur les figures 3, 6 et 7 la cavité 110 est représentée borgne et sur les figures 8 à 10, la cavité 110 est représentée débouchante, par sa portion distale 113, sur une face interne 114 du substrat 11 opposée à la face d'habillage 112.

L'élément décoratif 12 est réalisé par moulage tel que représenté schématiquement sur les figures 1 et 5, d'un seul tenant, sans chronologie particulière avec l'étape de réalisation du substrat 11. Il est réalisé dans un matériau polymère transparent, par exemple un thermoplastique choisi parmi un polycarbonate, un polyamide ou un poly(méthacrylate de méthyle).

L'élément décoratif 12 est avantageusement réalisé de sorte à présenter une charge de particules réflectives. Ces particules réflectives participent à augmenter l'indice de réfraction de l'élément décoratif 12 et à augmenter sa réflexion de sorte à rapprocher son apparence de celle d'une pierre précieuse. Les particules réflectives peuvent être constituées par des paillettes de matériau métallique et/ou de nacre, et leur proportion en masse est typiquement inférieure à 1 %. En outre, le matériau polymère est choisi de sorte à présenter un coefficient de transmission optique supérieur à 80%, voire 90%, voire 95%, afin que l'aspect visuel de l'élément décoratif 12 tende à ressembler au maximum à celui d'une pierre précieuse.

L'élément décoratif 12 est formé de sorte à présenter au moins une tête décorative 120 reliée à un pied d'ancrage 121, comme le montrent les figures. Préférentiellement, l'étape de réalisation de l'élément décoratif 12 est mise en oeuvre par injection, et le pied d'ancrage 121 est formé par toute ou partie d'une carotte d'injection comme visible sur les figures 1 et 5. Le pied d'ancrage 121 est donc d'une forme cylindrique, dont la section droite peut être circulaire, elliptique, polygonale, etc.

Dans un premier exemple de réalisation représenté sur les figures 1 à 3, l'élément décoratif 12 est réalisé de sorte que le pied d'ancrage 121 constitue une structure support reliant plusieurs têtes décoratives 120 entre elles. Comme visible sur la figure 2 en particulier, le pied d'ancrage 121 peut dans ce cas présenter une forme annulaire, les têtes décoratives 120 étant régulièrement réparties sur le pied autour d'un axe de révolution.

Dans cet exemple de réalisation, le procédé peut comporter une étape de dépôt d'une couche opaque sur le pied d'ancrage 121 afin d'isoler visuellement les têtes décoratives qui sont transparentes. Préférentiellement, la couche opaque est configurée de sorte qu'elle présente le même aspect visuel que celui de la face d'habillage 112.

Cette couche opaque peut être déposée par une méthode de dépôt de couche mince sous vide, par pulvérisation ou trempage sélectif, ou peut être déposée par injection lors de la mise en oeuvre de l'étape de réalisation de l'élément décoratif 12. En particulier, comme le montre la figure 4, la couche opaque peut être bi-injectée avec les têtes décoratives 120 et le pied d'ancrage 121. La couche opaque peut être réalisée dans le même matériau polymère, mais présente une charge opaque, par exemple d'une couleur donnée.

Dans un second exemple de réalisation représenté sur les figures 5 à 10, l'élément décoratif 12 est réalisé de sorte à comporter une unique tête décorative 120 relié à un pied d'ancrage 121 qui lui est propre.

Préférentiellement, lors de l'étape de réalisation de l'élément décoratif 12, une couche mince réflective est déposée sur au moins une face de l'élément décoratif 12 destinée à reposer en regard de la cavité 110 du substrat 11. Alternativement, lors de l'étape de réalisation du substrat 11, une couche réflective est déposée dans la cavité 110. La couche mince réflective peut être déposée par exemple par un procédé de dépôt sous vide, et est par exemple réalisée en SiO2 ou en TiO2.

Avantageusement, les parois du moule destinées à former la tête décorative 120 présentent un état de surface poli miroir, de sorte que les faces de la tête décorative 120 présentent également un état de surface poli miroir. Alternativement, le procédé peut comporter une étape de polissage de la tête décorative 120 de sorte que ses faces présentent un état de surface poli miroir. Cette caractéristique permet d'augmenter la transparence de la tête décorative 120.

Une autre caractéristique de l'invention permettant d'augmenter l'attractivité de l'aspect visuel de l'élément décoratif 12 consiste, lors de l'étape de réalisation de l'élément décoratif 12, à intégrer au matériau polymère une charge de particules photoluminescentes dans des proportions en masse inférieure à 1%. Alternativement ou de façon additionnelle, une couche mince de matériau photoluminescent peut être déposée sur les faces de la tête destinées à reposer en vis-à-vis de la cavité 110 du substrat 11.

Une fois le substrat 11 et l'élément décoratif 12 réalisés, une étape de fixation de l'élément décoratif 12 dans la cavité 110 du substrat 11 est mise en oeuvre. En particulier, lors de cette étape, le pied d'ancrage 121 coopère avec une portion de la cavité 110 de forme complémentaire.

Plus précisément, lors de l'étape de fixation, le pied d'ancrage 121 est engagée dans la cavité 110, jusqu'à ce que l'élément décoratif 12 arrive en butée, par exemple par sa tête décorative 120. La fixation de l'élément décoratif 12 dans la cavité 110 peut être réalisée par collage du pied dans la cavité 110, par exemple lorsqu'elle est borgne, tel qu'illustré sur la figure 7.

Alternativement, si la cavité 110 est débouchante, le pied d'ancrage 121 peut s'étendre au-delà du substrat 11 par une portion terminale 122 tel que visible sur la figure 9. Cette portion terminale 122 est déformée à chaud, par exemple par écrasement, c'est-à-dire, après avoir été chauffée pour ramollir la matière, afin de générer une lèvre radiale de matière formant une butée axiale, comme le montre la figure 10. Cette butée axiale permet de maintenir l'élément décoratif 12 en position dans la cavité 110. Naturellement, lors de la déformation de la portion terminale 122 de l'élément décoratif 12, ce dernier est soumis à une force antagoniste à celle nécessaire pour écraser la matière de la portion terminale 122.

De manière plus générale, il est à noter que les modes de mise en oeuvre et de réalisation considérés ci-dessus ont été décrits à titre d'exemples non limitatifs, et que d'autres variantes sont par conséquent envisageables.

Par exemple, sur les figures, les têtes décoratives 120 sont représentées avec des facettes, une table, une couronne et une culasse de manière analogue à une pierre précieuse taillée, mais elles pourraient toutefois présenter un autre aspect.

## Revendications

1. Procédé de fabrication d'une pièce d'habillage (10) **caractérisé en ce qu'**il comporte des étapes de :
- réalisation d'un substrat (11) comportant une cavité (110),
- réalisation, par moulage, d'un élément décoratif (12) dans un matériau polymère transparent présentant une charge de particules réflectives, dans laquelle l'élément décoratif (12) est formé de sorte à présenter au moins une tête décorative (120) reliée à un pied d'ancrage (121),
- fixation de l'élément décoratif (12) dans la cavité (110), de sorte que le pied d'ancrage (121) coopère par complémentarité de forme avec cette dernière.

2. Procédé selon la revendication 1, dans lequel l'étape de réalisation de l'élément décoratif (12) est mise en oeuvre par injection, le pied d'ancrage (121) étant formée par une carotte d'injection.

3. Procédé selon l'une des revendications 1 ou 2, dans lequel, lors de l'étape de réalisation de l'élément décoratif (12), ce dernier est réalisé de sorte que le pied d'ancrage (121) constitue une structure support reliant plusieurs têtes décoratives (120) entre elles.

4. Procédé selon la revendication 3, dans lequel une couche opaque est déposée sur le pied d'ancrage (121) par une méthode de dépôt de couche mince sous vide, par pulvérisation ou trempage sélectif ou par injection lors de la mise en oeuvre de l'étape de réalisation de l'élément décoratif (12).

5. Procédé selon l'une des revendications 1 ou 2, dans lequel, lors de l'étape de réalisation de l'élément décoratif (12), ce dernier est réalisé de sorte que l'élément décoratif (12) comporte une tête décorative (120) reliée à un pied d'ancrage (121) qui lui est propre.

6. Procédé selon la revendication 5, dans lequel lors de l'étape de fixation de l'élément décoratif (12), le pied d'ancrage (121) est collé dans la portion de la cavité (110) de forme complémentaire.

7. Procédé selon la revendication 5, dans lequel lors de l'étape de fixation de l'élément décoratif (12), le pied d'ancrage (121) s'étend au-delà du substrat (11) par une portion terminale (122), ladite portion terminale (122) étant déformée à chaud afin de générer une liaison permanente entre l'élément décoratif (12) et le substrat (11).

8. Procédé selon l'une des revendications 1 à 7, dans lequel, lors de l'étape de réalisation de l'élément décoratif (12), le matériau polymère est un thermoplastique choisi parmi un polycarbonate, un polyamide ou un poly(méthacrylate de méthyle).

9. Procédé selon l'une des revendications 1 à 8, dans lequel, lors de lors de l'étape de réalisation de l'élément décoratif (12), le matériau polymère est choisi de sorte à présenter un coefficient de transmission optique supérieur à 80%.

10. Procédé selon l'une des revendications 1 à 9, dans lequel, lors de l'étape de réalisation de l'élément décoratif (12), les particules réflectives sont constituées par des paillettes de matériau métallique et/ou de nacre.

11. Procédé selon l'une des revendications 1 à 10, dans lequel, lors de l'étape de réalisation de l'élément décoratif (12), la proportion en masse de la charge de particules réflectives est inférieure à 1%.

12. Procédé selon l'une des revendications 1 à 11, dans lequel, lors de l'étape de réalisation de l'élément décoratif (12), une couche mince réflective est déposée sur au moins une face de l'élément décoratif (12) destinée à reposer en regard de la cavité (110) du substrat (11).

13. Procédé selon l'une des revendications 1 à 11, dans lequel lors de l'étape de réalisation du substrat (11), une couche réflective est déposée dans la cavité (110).

14. Procédé selon la revendication 12 ou 13, dans lequel, la couche mince réflective est déposée par un procédé de dépôt sous vide et est réalisée en SiO2 ou en TiO2.

15. Procédé selon l'une des revendications 1 à 14, dans lequel, lors du moulage de l'élément décoratif (12), les parois du moule destinées à former la tête décorative (120) présentent un état de surface poli miroir.

16. Procédé selon l'une des revendications 1 à 15, comprenant une étape de polissage de la tête décorative (120) de sorte que ses faces présentent un état de surface poli miroir.

17. Procédé selon l'une des revendications 1 à 16, dans lequel, lors de l'étape de réalisation de l'élément décoratif (12), une charge de particules photoluminescentes est intégrée au matériau polymère dans des proportions en masse inférieure à 1%.

18. Procédé selon l'une des revendications 1 à 17, dans lequel, lors de l'étape de réalisation de l'élément décoratif (12), une fois l'élément décoratif (12) obtenu par moulage, une couche mince de matériau photoluminescent est déposée sur les faces de la tête destinées à reposer en vis-à-vis de la cavité (110) du substrat (11).

19. Pièce d'habillage (10) réalisée par un procédé selon l'une des revendications 1 à 18.
